# EUROPÄISCHE PATENTSCHRIFT

(11) **EP 2 233 327 B1**
(45) Veröffentlichungstag und Bekanntmachung des Hinweises auf die Patenterteilung: **30.11.2011**
(21) Anmeldenummer: 09004399.3
(22) Anmeldetag: 26.03.2009
(51) Int. Cl.: B60D 5/00, B61D 17/22

(54) **Mittelbügelsystem für ein Gelenkfahrzeug**
Bracket system for an articulated vehicle
Système de cintre moyen pour un véhicule articulé

(43) Veröffentlichungstag der Anmeldung: 29.09.2010
(73) Patentinhaber: ATG Autotechnik GmbH, 22962 Siek (DE)
(72) Erfinder:
(74) Vertreter: Glawe, Delfs, Moll

(56) Entgegenhaltungen:
- EP-A- 0 538 816
- EP-B- 0 897 337
- WO-A-91/02672
- DE-A1- 10 238 110
- DE-C1- 19 714 543

## Beschreibung

Die Erfindung betrifft ein Mittelbügelsystem für ein Fahrzeuggelenk. Das Fahrzeuggelenk ist zwischen einem Vorderwagen und einem Hinterwagen eines Gelenkfahrzeugs angeordnet und bildet einen Durchgang zwischen dem Vorderwagen und dem Hinterwagen. Das Mittelbügelsystem umfasst einen Mittelbügel und eine Kabelführung zwischen dem Vorderwagen und dem Hinterwagen. Der Mittelbügel umschließt den Durchgang. Die Kabelführung ist oberhalb des Durchgangs angeordnet.

Mittelbügelsysteme dieser Art kommen beispielsweise in Gelenkbussen zum Einsatz, in denen während der Fahrt ein Übergang der Passagiere zwischen dem Vorderwagen und dem Hinterwagen möglich ist. Um die Passagiere vor Umgebungseinflüssen zu schützen, ist zwischen dem Vorderwagen und dem Hinterwagen typischerweise ein Faltenbalg vorgesehen, der das Fahrzeuggelenk umgibt.

In Gelenkfahrzeugen dieser Art gibt es technische Funktionen, die sowohl den Vorderwagen als auch den Hinterwagen betreffen. Betätigt beispielsweise der im Vorderwagen sitzende Fahrer den Lichtschalter, so soll dies dazu führen, dass ein Rücklicht des Hinterwagens leuchtet. Um dies zu ermöglichen, erstreckt sich ein elektrisches Kabel vom Vorderwagen über den Zwischenraum hinweg bis zum Hinterwagen. Weitere Funktionen erfordern beispielsweise Hydraulikleitungen, Luftschläuche und sonstige Versorgungsleitungen zwischen dem Vorderwagen und dem Hinterwagen.

Inzwischen sind sogenannte Niederflurfahrzeuge weit verbreitet, bei denen der für die Passagiere bestimmte Boden möglichst tief angeordnet ist. Soll der Übergang zwischen dem Vorderwagen und dem Hinterwagen stufenfrei sein, bleibt unter dem Durchgang, der den Vorderwagen und den Hinterwagen verbindet, nur wenig Platz für das Fahrzeuggelenk. Aus dem Stand der Technik ist es bekannt, zwischen dem Vorderwagen und dem Hinterwagen geführte Kabel nicht unterhalb, sondern oberhalb des Durchgangs anzuordnen (Siehe die gattungsbildende EP-A-897337). Oberhalb des Durchgangs sind die Kabel am Endrahmen des Vorderwagens, am Endrahmen des Hinterwagens und am Mittelbügel befestigt. Dazwischen haben die Kabel keine feste Führung, sie werden lediglich durch ihre Eigenstabilität gehalten.

Der Erfindung liegt die Aufgabe zu Grunde, ein Mittelbügelsystem vorzustellen, das eine zuverlässigere Führung der Kabel zwischen dem Vorderwagen und dem Hinterwagen ermöglicht. Ausgehend vom eingangs genannten Stand der Technik wird die Aufgabe gelöst durch die Merkmale des Anspruchs 1. Danach ist erfindungsgemäß eine Blattfeder für die Kabelführung vorgesehen, die sich vom Vorderwagen bis zum Hinterwagen erstreckt. Vorteilhafte Ausführungsformen finden sich in den Unteransprüchen.

Zunächst werden einige Begriffe erläutert. Kabel im Sinne der vorliegenden Erfindung dienen dazu, technische Funktionen des Vorderwagens und des Hinterwagens miteinander zu verknüpfen. Der Begriff Kabel umfasst alle Versorgungsleitungen, über die Signale oder Kräfte zwischen dem Vorderwagen und dem Hinterwagen übertragen werden. Vom Begriff Kabel sind insbesondere umfasst elektrische Kabel, Glasfaserleitungen, Hydraulikleitungen, Luftschläuche für Klimaanlage und Heizung.

Eine Blattfeder ist ein lang gestrecktes Element, das sich quer zu seiner Längsrichtung in einer Richtung leicht elastisch verformen lässt und in einer anderen Richtung schwerer elastisch verformen lässt. In dem erfindungsgemäßen Mittelbügelsystem ist die Blattfeder so angeordnet, dass sie sich in horizontaler Richtung leicht und in vertikaler Richtung schwerer verformen lässt. Die Blattfeder kann beispielsweise aus handelsüblichem Federstahl gefertigt sein. In Betracht können aber auch andere Materialien, wie beispielsweise Kunststoffe, kommen. Die Blattfeder kann in entspanntem Zustand gerade sein, sie kann auch eine bereits vorgebogene Form haben.

Die Blattfeder wird so zwischen dem Vorderwagen und dem Hinterwagen aufgehängt, dass sie alle bei Schwenkbewegungen oder Nickbewegungen auftretenden Abstandsänderungen zwischen dem Vorderwagen und dem Hinterwagen durch elastische Verformung ausgleicht. Die Erfindung macht sich zunutze, dass die elastische Verformung der Blattfeder zum weit überwiegenden Teil in der horizontalen und nicht in der vertikalen Ebene stattfindet. Die elastische Verformung überträgt sich von der Blattfeder auf die Kabel, so dass diese über die gesamte Länge zwischen dem Vorderwagen und dem Hinterwagen durch die Blattfeder geführt werden. Durch die Erfindung wird also erreicht, dass trotz Nickbewegungen oder Schwenkbewegungen des Gelenkfahrzeugs keine undefinierten Bewegungen des Kabels stattfinden. Das Risiko einer Beschädigung der Kabel ist vermindert.

Der Vorderwagen wird durch einen hinteren Endrahmen, der Hinterwagen durch einen vorderen Endrahmen abgeschlossen. Die beiden Endrahmen begrenzen den Zwischenraum zwischen dem Vorderwagen und dem Hinterwagen. Vorzugsweise ist eine Befestigung zwischen Blattfeder und Endrahmen vorgesehen, wobei die Befestigung in der Nähe des Durchtritts der Kabel durch die Endrahmen angeordnet sein sollte. Die Befestigung kann starr sein. Für den Ausgleich von Nickbewegungen ist es aber vorteilhaft, wenn eine Schwenkbewegung der Blattfeder relativ zum Endrahmen möglich ist. Dazu kann ein Schwenkgelenk zwischen der Blattfeder und dem Endrahmen vorgesehen sein, das vorzugsweise eine horizontale Schwenkachse hat.

Möglich ist es, dass die Blattfeder zwischen den beiden Endrahmen frei von weiteren Befestigungspunkten ist und lediglich durch ihre Eigenstabilität gehalten wird. Allerdings besteht dann die Gefahr, dass die Blattfeder in Schwingungen versetzt wird und unerwünschte Bewegungen vollführt, beispielsweise am Mittelrahmen anstößt. Es kann deswegen vorgesehen sein, dass die Blattfeder an dem Mittelbügel aufgehängt ist. Die Blattfeder hat dann eine doppelte Funktion, indem sie einerseits die Kabel zwischen Vorderwagen und Hinterwagen führt und andererseits Schwingungen des Mittelbügels dämpft. Mit dieser doppelten Wirkung wird ein besonderer Vorteil der Erfindung realisiert.

Die Aufhängung der Blattfeder kann mittig, also am Schnittpunkt von Fahrzeugmittellinie und Mittelbügel, sein. Dies bietet sich insbesondere an, wenn sich die Blattfeder von der linken Fahrzeughälfte des Vorderwagens bis zur rechten Fahrzeughälfte des Hinterwagens erstreckt oder umgekehrt.

Im Normalzustand ist bei einer vorteilhaften Ausführungsform die Blattfeder im Bereich der Aufhängung im wesentlichen parallel zu dem Mittelbügel ausgerichtet, schließt also mit der Richtung des Mittelbügels einen Winkel von weniger als 45°, vorzugsweise weniger als 30° ein. Vom Normalzustand eines Gelenkfahrzeugs wird gesprochen, wenn der Vorderwagen und der Hinterwagen auf einer ebenen Fläche stehen, ohne dass das Fahrzeuggelenk eingeschwenkt ist. Häufig ist der Endrahmen des Vorderwagens dann parallel zum Endrahmen des Hinterwagens ausgerichtet. Damit die Blattfeder ausreichend Spielraum für den Ausgleich der Nickbewegungen und Schwenkbewegungen hat, ist sie vorzugsweise mindestens 1,3 mal, weiter vorzugsweise mindestens 1,5 mal so lang wie der Abstand zwischen den beiden Endrahmen im Normalzustand.

Die Blattfeder kann über ein Gelenk am Mittelbügel aufgehängt sein. Das Gelenk ermöglicht eine Schwenkbewegung der Blattfeder relativ zu dem Mittelbügel, wobei die Schwenkachse vorzugsweise senkrecht ausgerichtet ist. Dadurch wird erreicht, dass Schwingungen der Blattfeder in senkrechter Richtung ausgeschlossen sind, während sich die Blattfeder in horizontaler Richtung relativ frei bewegen kann. Wenn die Achse des Gelenks zusätzlich mit der Drehachse des Mittelbügels übereinstimmt, kann der Mittelbügel um die senkrechte Achse geschwenkt werden, ohne dass dies einen Einfluss auf die Stellung der Blattfeder hat.

In einer alternativen Ausführungsform kann eine starre Verbindung zwischen der Blattfeder und dem Mittelbügel vorgesehen sein. Die Blattfeder trägt dann in größerem Umfang dazu bei, den Mittelbügel zu stabilisieren. Allerdings unterliegt die Blattfeder im Bereich der Verbindung zum Mittelbügel stärkeren Verformungen.

Alternativ oder zusätzlich zu der Gelenkverbindung kann eine Schiebeführung zwischen der Blattfeder und dem Mittelbügel vorgesehen sein. Auch auf diese Weise kann erreicht werden, dass Schwingungen der Blattfeder in senkrechter Richtung unterbunden werden, während im übrigen nur möglichst geringe Kräfte zwischen der Blattfeder und dem Mittelbügel übertragen werden. Eine Schiebeführung kann insbesondere dann von Vorteil sein, wenn die Blattfeder außermittig am Mittelbügel aufgehängt ist.

Um die Kabel relativ zu der Blattfeder in Position zu halten, können Führungselemente an der Blattfeder vorgesehen sein. Die Führungselemente können so ausgebildet sein, dass die Kabel oberhalb oder unterhalb der Blattfeder zu liegen kommen. Die Kabel folgen dann exakt dem von der Blattfeder vorgegebenen Weg. Eine im Vergleich dazu geringere Bauhöhe kann erreicht werden, wenn die Führungselemente so ausgebildet sind, dass die Kabel seitlich der Blattfeder zu liegen kommen. Allerdings kann es dann bei einer Verformung der Blattfeder zu Längsverschiebungen zwischen der Blattfeder und den Kabeln kommen.

Zum zusätzlichen Stabilisieren des Mittelbügels können ein oder mehrere Stoßdämpfer vorgesehen sein, die oberhalb des Durchgangs angeordnet sind und die sich zwischen dem Mittelbügel und dem Endrahmen des Vorderwagens oder Hinterwagens erstrecken. Die Dämpfungswirkung des Stoßdämpfers kann insbesondere auf einem Federzylinder, einem Gasdruckdämpfer oder einem hydraulischen Dämpfer beruhen. Die Stoßdämpfer sollen den Mittelbügel stabilisieren, ohne zugleich ein Drehmoment auszuüben. Die Stoßdämpfer sind deswegen vorzugsweise in der Mittellinie des Gelenkfahrzeugs angeordnet.

Die Erfindung betrifft ferner ein Fahrzeuggelenk, das mit einem erfindungsgemäßen Mittelbügelsystem ausgestattet ist. Das Fahrzeuggelenk ist dazu ausgelegt, einen Vorderwagen mit einem Hinterwagen zu verbinden und dabei einen Durchgang zwischen dem Vorderwagen und dem Hinterwagen zu bilden. Außerdem umfasst die Erfindung ein mit einem solchen Gelenk ausgestattetes Gelenkfahrzeug.

Die Erfindung wird nachfolgend unter Bezugnahme auf die beigefügten Zeichnungen anhand einer vorteilhaften Ausführungsform beispielhaft beschrieben. Es zeigen:
- Fig. 1:: eine perspektivische Ansicht eines erfindungsge- mäßen Mittelbügelsystems;
- Fig. 2:: eine schematische Ansicht von oben auf ein erfin- dungsgemäßes Mittelbügelsystem;
- Fig. 3:: einen Schnitt entlang der Linie A-A aus Fig. 2;
- Fig. 4, 5, 6:: die Ansicht aus Fig. 3 bei anderen Ausfüh- rungsformen der Erfindung;
- Fig. 7:: eine schematische Ansicht von oben auf ein erfin- dungsgemäßes Mittelbügelsystem;
- Fig. 8:: die Ansicht aus Fig. 7 bei einer weiteren Ausfüh- rungsform der Erfindung; und
- Fig. 9:: eine Verbindung zwischen Blattfeder und Endrah- men.

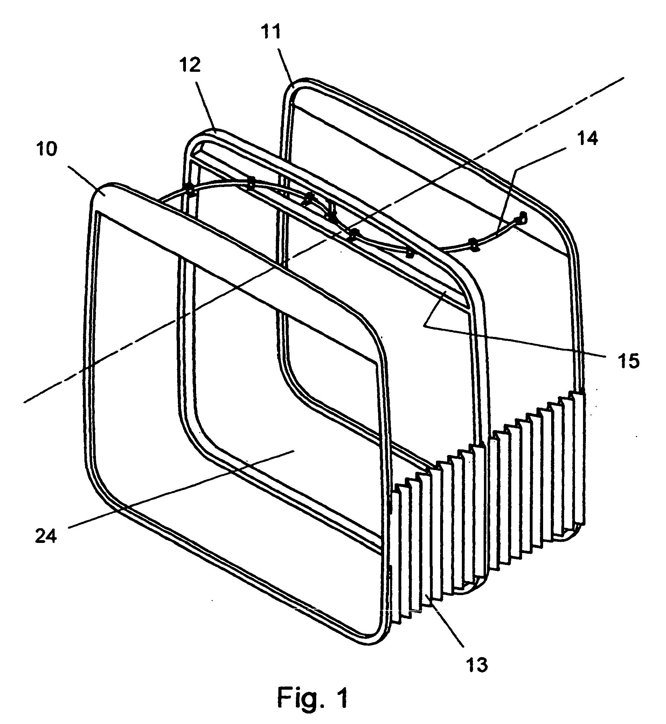

Bei Gelenkfahrzeugen, wie beispielsweise Gelenkbussen, sind ein Vorderwagen und ein Hinterwagen über ein Fahrzeuggelenk miteinander verbunden. Das Fahrzeuggelenk ist so gestaltet, dass für die Passagiere während der Fahrt ein Übergang zwischen dem Vorderwagen und dem Hinterwagen möglich ist. In Fig. 1 sind ein hinterer Endrahmen 10 eines Vorderwagens und ein vorderer Endrahmen 11 eines Hinterwagens gezeigt. Der Vorderwagen und der Hinterwagen sind über ein nicht dargestelltes Fahrzeuggelenk miteinander verbunden. Auf dem Fahrzeuggelenk ist ein Mittelbügel 12 angeordnet, dessen Kontur mit der Kontur der Endrahmen 10, 11 übereinstimmt. Die Endrahmen 10, 11 und der Mittelbügel 12 umschließen einen Durchgang 24; eine Person, die den Durchgang 24 zwischen dem Vorderwagen und dem Hinterwagen nutzt, tritt -durch die beiden Endrahmen 10, 11 und den Mittelbügel 12 hindurch.

Der Durchgang 24 ist mit einem in Fig. 1 nur ausschnittsweise angedeuteten Faltenbalg 13 umschlossen, der die Passagiere vor Umgebungseinflüssen schützt. Der Faltenbalg 13 besteht aus zwei Hälften, wobei sich die vordere Hälfte zwischen dem Endrahmen 10 des Vorderwagens und dem Mittelbügel 12 erstreckt und wobei sich die hintere Hälfte zwischen dem Mittelbügel 12 und dem Endrahmen 11 des Hinterwagens erstreckt. Der Mittelbügel 12 dient dazu, dem Faltenbalg 13 Halt zu geben.

Der Mittelbügel 12 umfasst eine oberhalb des Durchgangs 24 angeordnete Traverse 15. Der Durchgang 24 ist auf der Höhe der Traverse mit einer nicht dargestellten Abdeckung abgehängt, so dass zwischen der Abdeckung und dem äußeren Faltenbalg 13 ein Hohlraum gebildet wird. Die Abdeckung bildet die Decke des Durchgangs 24.

In Fig. 1 befindet sich das Gelenkfahrzeug im Normalzustand, es steht also auf einer ebenen Fläche und der Hinterwagen ist relativ zum Vorderwagen nicht eingeschwenkt. Die Endrahmen 10, 11 und der Mittelbügel 12 sind in zueinander parallelen Ebenen angeordnet. Führt das Gelenkfahrzeug Nickbewegungen oder Schwenkbewegungen aus, so bewegen sich die Endrahmen 10, 11 und der Mittelbügel 12 relativ zueinander. Da die Endrahmen 10, 11 und der Mittelbügel 12 im unteren Bereich durch das Fahrzeuggelenk in einem festen Abstand zueinander gehalten werden, unterliegen insbesondere die oberen Abschnitte der Endrahmen 10, 11 und des Mittelbügels 12 erheblichen Bewegungen relativ zueinander.

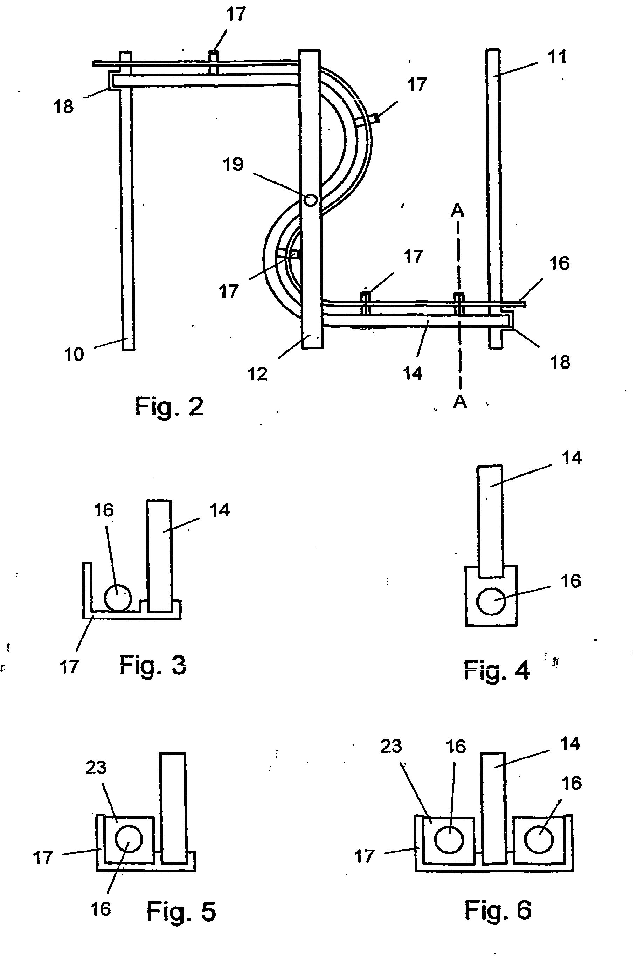

Für bestimmte technische Funktionen des Gelenkfahrzeugs erstrecken sich Kabel 16 zwischen dem Vorderwagen und dem Hinterwagen. In den Figuren 2 bis 4 ist beispielhaft ein einzelnes Kabel 16 dargestellt, regelmäßig ist aber eine Mehrzahl von Kabeln 16 vorhanden. Die Kabel 16 können beispielsweise elektrische oder optische Signale übertragen, Hydraulikleitungen, Luftschläuche oder sonstige Versorgungsleitungen sein. Um den Platzbedarf unterhalb des Durchgangs 24 möglichst gering zu halten, werden die Kabel 16 oberhalb des Durchgangs 24 angeordnet. Die Kabel 16 münden jeweils durch die Endrahmen 10, 11 in den Zwischenraum zwischen dem Vorderwagen und dem Hinterwagen. In dem Zwischenraum werden die Kabel so geführt, dass sie durch Schwenkbewegungen und Nickbewegungen des Gelenkfahrzeugs nicht beeinträchtigt werden.

Für die Kabelführung im Zwischenraum zwischen dem Vorderwagen und dem Hinterwagen ist eine Blattfeder 14 vorgesehen. Die Blattfeder 14 erstreckt sich entlang einem geschwungenen Weg zwischen dem Vorderwagen und dem Hinterwagen. In Fig. 1 ist der geschwungene Weg S-förmig. Er beginnt in der linken Fahrzeughälfte am Endrahmen 11 des Hinterwagens, quert die Fahrzeugmittellinie beim Mittelbügel 12 und endet in der rechten Fahrzeughälfte am Endrahmen 10 des Vorderwagens.

Die Blattfeder 14 hat, wie die Figuren 3 bis 5 zeigen, einen rechteckigen Querschnitt, wobei die längere Seite des Rechtecks vertikal und die kurze Seite des Rechtecks horizontal ausgerichtet ist. Die Blattfeder 14 lässt sich dadurch in horizontaler Richtung leicht verformen, während sie in vertikaler Richtung erhebliche Stabilität aufweist. Die Blattfeder 14 kann dadurch Relativbewegungen der Endrahmen 10, 11 zueinander ausgleichen, wobei die Verformung der Blattfeder weit überwiegend in der horizontalen Ebene und allenfalls in geringem Umfang in vertikaler Richtung stattfindet.

An der Blattfeder 14 ist eine Mehrzahl von Führungselementen 17 angeordnet, mit denen die Kabel 16 parallel zu der Blattfeder 14 gehalten werden. Auf diese Weise sind die Kabel 16 genau wie die Blattfeder 14 so geführt, dass Relativbewegungen zwischen den Endrahmen 10, 11 ausgeglichen werden, ohne dass damit eine erhebliche Bewegung in vertikaler Richtung verbunden wäre. Die Bewegung der Kabel 16 ist über die gesamte Strecke zwischen den Endrahmen 10, 11 durch die Blattfeder 14 vorgegeben, so dass undefinierte Bewegungen der Kabel 16 ausgeschlossen sind.

Bei der in Fig. 2 gezeigten Ausführungsform ist die Blattfeder 14 im entspannten Zustand gerade. Hat die Blattfeder die in Fig. 2 gezeigte S-Form, so steht sie unter Spannung, so dass Vertiefungen 18 in den Endrahmen 10, 11 ausreichen, um die Blattfeder in diesen Zustand zu halten. Zusätzliche Befestigungsmittel können vorhanden sein, sind aber nicht zwingend erforderlich.

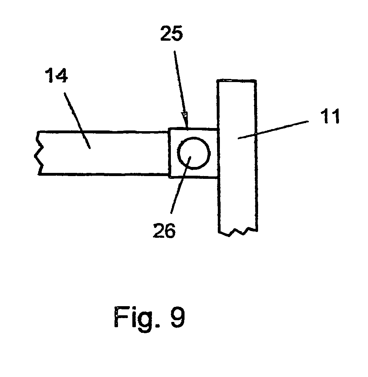

Bei der alternativen Ausführungsform der Fig. 9 ist ein Schwenkgelenk 25 mit einer horizontalen Schwenkachse 26 zwischen der Blattfeder 14 und dem Endrahmen 11 des Hinterwagens vorgesehen. Ein entsprechendes Schwenkgelenk verbindet die Blattfeder 14 mit dem Endrahmen 10 des Vorderwagens. Über das Schwenkgelenk 25 kann die Blattfeder 14 Nickbewegungen zwischen dem Vorderwagen und dem Hinterwagen ausgleichen.

In Fig. 2 ist die Blattfeder 14 über ein Gelenk 19 mit dem Mittelbügel 12 verbunden. Das Gelenk 19 ist in der Mittellinie des Fahrzeugs angeordnet und bildet eine senkrechte Schwenkachse zwischen der Blattfeder 14 und dem Mittelbügel 12.

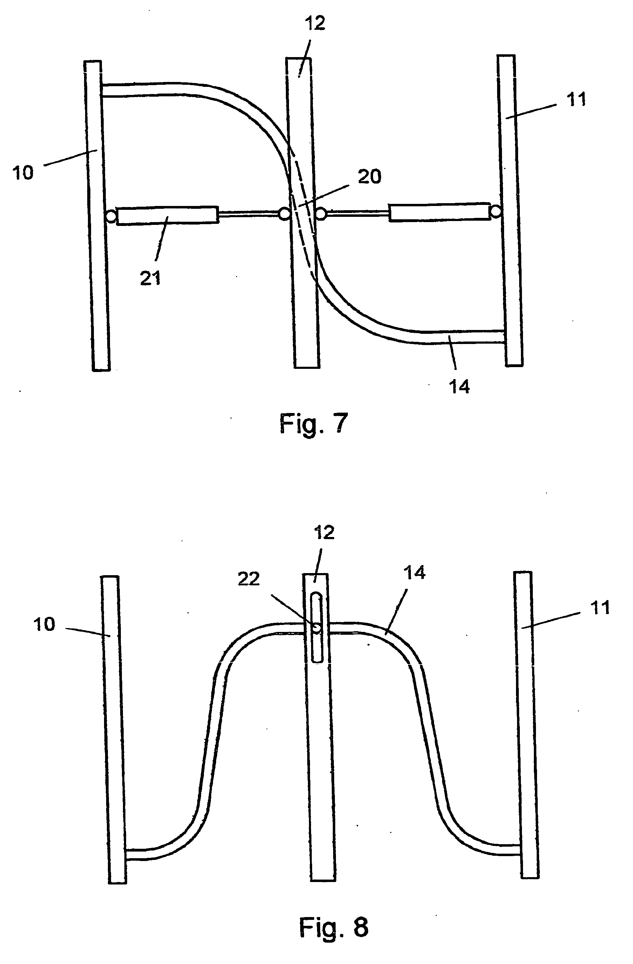

Bei der in Fig. 7 gezeigten alternativen Ausführungsform ist die Blattfeder bei 20 starr mit dem Mittelbügel 12 verbunden. Dies hat den Vorteil, dass die Blattfeder 14 gleichzeitig einen größeren Beitrag dazu leisten kann, den Mittelbügel 12 zu stabilisieren. Auf der anderen Seite müssen stärkere Verformungen der Blattfeder in Kauf genommen werden, wenn sich die Endrahmen 10, 11 relativ zueinander bewegen. Zur weiteren Stabilisierung des Mittelbügels 12 sind Stoßdämpfer 21 zwischen den Endrahmen 10, 11 und dem Mittelbügel 12 vorgesehen. Die Stoßdämpfer 21 erstrecken sich in der Mittellinie des Gelenkfahrzeugs.

In Fig. 8 hat die Blattfeder 14 eine doppelte S-Form. Sie beginnt in der linken Fahrzeughälfte beim Endrahmen 11, erstreckt sich über die rechte Fahrzeughälfte beim Mittelbügel 12 zurück zur linken Fahrzeughälfte beim Endrahmen 10. Zwischen dem Mittelbügel 12 und der Blattfeder 14 ist eine quer zur Fahrtrichtung ausgerichtete Schiebeführung 22 vorgesehen. Die Relativbewegungen zwischen den Endrahmen 10, 11 werden dadurch ausgeglichen, dass sich die Blattfeder in der Schiebeführung 22 relativ zu dem Mittelbügel 12 bewegt. Bei dieser Ausführungsform sind nur geringe Verformungen der Blattfeder 14 erforderlich, um Relativbewegungen der Endrahmen 10, 11 auszugleichen.

Bei der Ausführungsform der Figuren 2 und 3 ist das beispielhaft dargestellte einzige Kabel 16 seitlich von der Blattfeder 14 geführt. Bei dieser Anordnung können Verformungen der Blattfeder 14 dazu führen, dass sich das Kabel 16 leicht in Längsrichtung relativ zu der Blattfeder 14 verschiebt. Um Längsverschiebungen zu verhindern, kann das Kabel 16, wie in Fig. 4 gezeigt, in derselben vertikalen Ebene angeordnet sein wie die Blattfeder 14. Das Kabel 16 folgt dann über die gesamte Länge genau dem Weg der Blattfeder 14, so dass es nicht zu Verschiebungen kommt. In der weiteren Ausführungsform der Fig. 5 ist ein Halter 23 zwischen dem Kabel 16 und dem Führungselement 17 vorgesehen. Der Halter 23 kann fest mit dem Führungselement 17 verbunden sein oder gegenüber dem Führungselement 17 verschiebbar sein. Insbesondere wenn der Halter 23 fest mit dem Führungselement 17 verbunden ist, kann vorgesehen sein, dass das Führungselement 17 relativ zu der Blattfeder 14 beweglich ist, um Längsverschiebungen auszugleichen. In Fig. 6 werden die Kabel 16 zu beiden Seiten der Blattfeder geführt.

## Patentansprüche

1. Mittelbügelsystem für ein zwischen einem Vorderwagen und einem Hinterwagen angeordnetes, einen Durchgang (24) zwischen dem Vorderwagen und dem Hinterwagen bildendes Fahrzeuggelenk, umfassend einen Mittelbügel (12) und eine Kabelführung zwischen dem Vorderwagen und dem Hinterwagen, wobei der Mittelbügel (12) den Durchgang (24) umschließt und wobei die Kabelführung oberhalb des Durchgangs (24) angeordnet ist, **dadurch gekennzeichnet, dass** für die Kabelführung eine Blattfeder (14) vorgesehen ist, die sich vom Vorderwagen bis zum Hinterwagen erstreckt.

2. Mittelbügelsystem nach Anspruch 1, **dadurch gekennzeichnet, dass** eine die Blattfeder (14) mit dem Mittelbügel (12) verbindende Aufhängung vorgesehen ist.

3. Mittelbügelsystem nach Anspruch 2, **dadurch gekennzeichnet, dass** die Aufhängung eine starre Verbindung (20) zwischen der Blattfeder (14) und dem Mittelbügel (12) bildet.

4. Mittelbügelsystem nach Anspruch 2, **dadurch gekennzeichnet, dass** die Aufhängung eine Gelenkverbindung (19) zwischen der Blattfeder (14) und dem Mittelbügel (12) bildet.

5. Mittelbügelsystem nach Anspruch 2, **dadurch gekennzeichnet, dass** die Aufhängung eine Schiebeführung (22) zwischen der Blattfeder (14) und dem Mittelbügel (12) bildet.

6. Mittelbügelsystem nach einem der Ansprüche 2 bis 5, **dadurch gekennzeichnet, dass** die Aufhängung mittig am Mittelbügel (12) angeordnet ist.

7. Mittelbügelsystem nach einem der Ansprüche 2 bis 6, **dadurch gekennzeichnet, dass** sich die Blattfeder (14) im Bereich der Aufhängung im Wesentlichen parallel zum Mittelbügel (12) erstreckt.

8. Mittelbügelsystem nach einem der Ansprüche 1 bis 7, **dadurch gekennzeichnet, dass** ein Schwenkgelenk (25) zwischen der Blattfeder (14) und dem Endrahmen (10, 11) des Vorderwagens und/oder Hinterwagens vorgesehen ist.

9. Mittelbügelsystem nach einem der Ansprüche 1 bis 8, **dadurch gekennzeichnet, dass** an der Blattfeder (14) Führungselemente (17) für Kabel (16) angeordnet sind.

10. Mittelbügelsystem nach Anspruch 9, **dadurch gekennzeichnet, dass** die Führungselemente (17) so ausgebildet sind, dass die Kabel (16) seitlich der Blattfeder (14) zu liegen kommen.

11. Mittelbügelsystem nach einem der Ansprüche 1 bis 10, **dadurch gekennzeichnet, dass** die Blattfeder (14) mindestens 1,3 mal, vorzugsweise mindestens 1,5 mal so lang ist wie der Abstand zwischen dem Endrahmen (10) des Vorderwagens und dem Endrahmen (11) des Hinterwagens im Normalzustand.

12. Mittelbügelsystem nach einem der Ansprüche 1 bis 11, **dadurch gekennzeichnet, dass** ein Stoßdämpfer (21) zwischen dem Mittelbügel und dem Endrahmen des Vorderwagens oder dem Endrahmen des Hinterwagens vorgesehen ist.

13. Fahrzeuggelenk zum Verbinden eines Vorderwagens mit einem Hinterwagen, wobei das Fahrzeuggelenk einen Durchgang zwischen dem Vorderwagen und dem Hinterwagen bildet, **dadurch gekennzeichnet, dass** es ein Mittelbügelsystem nach einem der Ansprüche 1 bis 12 umfasst.

14. Fahrzeug mit einem Vorderwagen und einem Hinterwagen, **dadurch gekennzeichnet, dass** die Verbindung zwischen dem Vorderwagen und dem Hinterwagen durch ein Fahrzeuggelenk nach Anspruch 13 gebildet ist.

## Claims

1. Middle hoop system for a vehicle joint which is arranged between a vehicle front part and a vehicle rear part and which forms a passage (24) between the vehicle front part and the vehicle rear part, comprising a middle hoop (12) and a cable guide between the vehicle front part and the vehicle rear part, with the middle hoop (12) surrounding the passage (24) and with the cable guide being arranged above the passage (24), **characterized in that**, for the cable guide, a leaf spring (14) is provided which extends from the vehicle front part to the vehicle rear part.

2. Middle hoop system according to Claim 1, **characterized in that** a suspension is provided which connects the leaf spring (14) to the middle hoop (12).

3. Middle hoop system according to Claim 2, **characterized in that** the suspension forms a rigid connection (20) between the leaf spring (14) and the middle hoop (12).

4. Middle hoop system according to Claim 2, **characterized in that** the suspension forms an articulated connection (19) between the leaf spring (14) and the middle hoop (12).

5. Middle hoop system according to Claim 2, **characterized in that** the suspension forms a sliding guide (22) between the leaf spring (14) and the middle hoop (12).

6. Middle hoop system according to one of Claims 2 to 5, **characterized in that** the suspension is arranged centrally on the middle hoop (12).

7. Middle hoop system according to one of Claims 2 to 6, **characterized in that**, in the region of the suspension, the leaf spring (14) extends substantially parallel to the middle hoop (12).

8. Middle hoop system according to one of Claims 1 to 7, **characterized in that** a pivot joint (25) is provided between the leaf spring (14) and the end frame (10, 11) of the vehicle front part and/or vehicle rear part.

9. Middle hoop system according to one of Claims 1 to 8, **characterized in that** guide elements (17) for cables (16) are arranged on the leaf spring (14).

10. Middle hoop system according to Claim 9, **characterized in that** the guide elements (17) are designed such that the cables (16) lie to the side of the leaf spring (14).

11. Middle hoop system according to one of Claims 1 to 10, **characterized in that** the leaf spring (14) is at least 1.3 times, preferably at least 1.5 times as long as the spacing between the end frame (10) of the vehicle front part and the end frame (11) of the vehicle rear part in the normal state.

12. Middle hoop system according to one of Claims 1 to 11, **characterized in that** a shock absorber (21) is provided between the middle hoop and the end frame of the vehicle front part or the end frame of the vehicle rear part.

13. Vehicle joint for connecting a vehicle front part to a vehicle rear part, with the vehicle joint forming a passage between the vehicle front part and the vehicle rear part, **characterized in that** said vehicle joint comprises a middle hoop system according to one of Claims 1 to 12.

14. Vehicle having a vehicle front part and a vehicle rear part, **characterized in that** the connection between the vehicle front part and the vehicle rear part is formed by a vehicle joint according to Claim 13.

## Revendications

1. Système de cintre médian pour une articulation de véhicule, agencée entre un véhicule avant et un véhicule arrière et formant un passage (24) entre le véhicule avant et le véhicule arrière, comportant un cintre médian (12) et un guidage de câbles entre le véhicule avant et le véhicule arrière, ledit cintre médian (12) entourant le passage (24) et ledit guidage de câbles étant disposé au-dessus du passage (24), **caractérisé en ce que** pour le guidage de câbles, il est prévu un ressort à lames (14) qui s'étend depuis le véhicule avant jusqu'au véhicule arrière.

2. Système de cintre médian selon la revendication 1, **caractérisé en ce qu'**il est prévu une suspension reliant le ressort à lames (14) avec le cintre médian (12).

3. Système de cintre médian selon la revendication 2, **caractérisé en ce que** la suspension forme un assemblage (20) rigide entre le ressort à lames (14) et le cintre médian (12).

4. Système de cintre médian selon la revendication 2, **caractérisé en ce que** la suspension forme un assemblage articulé entre le ressort à lames (14) et le cintre médian (12).

5. Système de cintre médian selon la revendication 2, **caractérisé en ce que** la suspension forme une coulisse de guidage (22) entre le ressort à lames (14) et le cintre médian (12).

6. Système de cintre médian selon l'une quelconque des revendications 2 à 5, **caractérisé en ce que** la suspension est agencée au milieu sur le cintre médian (12).

7. Système de cintre médian selon l'une quelconque des revendications 2 à 6, **caractérisé en ce que** le ressort à lames (14) s'étend dans la zone de la suspension sensiblement parallèlement au cintre médian (12).

8. Système de cintre médian selon l'une quelconque des revendications 1 à 7, **caractérisé en ce qu'**il est prévu une articulation pivotante (25) entre le ressort à lames (14) et le cadre d'extrémité (10, 11) du véhicule avant et/ou du véhicule arrière.

9. Système de cintre médian selon l'une quelconque des revendications 1 à 8, **caractérisé en ce que** des éléments de guidage (17) pour des câbles (16) sont agencés sur le ressort à lames (14).

10. Système de cintre médian selon la revendication 9, **caractérisé en ce que** les éléments de guidage (17) sont configurés de telle sorte que les câbles (16) viennent latéralement en appui contre le ressort à lames (14).

11. Système de cintre médian selon l'une quelconque des revendications 1 à 10, **caractérisé en ce que** le ressort à lames (14) a une longueur correspondant au moins à 1,3 fois, de préférence au moins 1,5 fois la distance entre le cadre d'extrémité (10) du véhicule avant et le cadre d'extrémité (11) du véhicule arrière en position normale.

12. Système de cintre médian selon l'une quelconque des revendications 1 à 11, **caractérisé en ce qu'**un amortisseur de chocs (21) est prévu entre le cintre médian et le cadre d'extrémité du véhicule avant ou le cadre d'extrémité du véhicule arrière.

13. Articulation de véhicule permettant de relier un véhicule avant à un véhicule arrière, ladite articulation de véhicule formant un passage entre le véhicule avant et le véhicule arrière, **caractérisée en ce qu'**elle comporte un système de cintre médian selon l'une quelconque des revendications 1 à 12.

14. Véhicule comportant un véhicule avant et un véhicule arrière, **caractérisé en ce que** la liaison entre le véhicule avant et le véhicule arrière est formée par une articulation de véhicule selon la revendication 13.
